# EUROPÄISCHE PATENTSCHRIFT

(11) **EP 2 951 259 B1**
(45) Veröffentlichungstag und Bekanntmachung des Hinweises auf die Patenterteilung: **04.03.2020**
(21) Anmeldenummer: 14702529.0
(22) Anmeldetag: 29.01.2014
(51) Int. Cl.: C09J 177/00, B32B 5/26, B32B 7/12, B32B 15/088, B32B 17/06, B32B 21/08, B32B 21/10, B32B 27/06, B32B 27/12, B32B 27/34, C08J 5/12

(54) **FASERVERBUNDWERKSTOFF-HYBRIDBAUTEILE**
HYBRID FIBRE COMPOSITE MATERIAL COMPONENTS
COMPOSANTS HYBRIDES DE MATÉRIAU EN FIBRES COMPOSITES

(30) Priorität: 29.01.2013 DE 102013201388; 29.05.2013 EP 13002778
(43) Veröffentlichungstag der Anmeldung: 09.12.2015
(73) Patentinhaber: Evonik Operations GmbH, 45128 Essen (DE)
(72) Erfinder: GRUHN, Maximilian, 45770 Marl (DE); KUHMANN, Karl, 48249 Dülmen (DE); RISTHAUS, Martin, 59399 Olfen (DE)
(74) Vertreter: Evonik Patent Association
(86) Internationale Anmeldenummer: PCT/EP2014/051692
(87) Internationale Veröffentlichungsnummer: WO 2014/118210

(56) Entgegenhaltungen:
- EP-A1- 0 009 950
- EP-A1- 0 009 951
- EP-A2- 1 808 468
- WO-A1-2010/136241
- DE-C1- 3 730 504
- US-A- 4 214 019
- US-A- 4 215 159
- US-A- 4 217 376
- US-A- 4 219 458
- US-A- 4 219 459
- US-A- 4 222 976
- US-A- 4 252 712

## Beschreibung

Die vorliegende Erfindung betrifft Hybridbauteile, Verfahren zu ihrer Herstellung und ihre Verwendung sowie die Verwendung von Haftvermittler-Zusammensetzungen.

Hybridbauteile des Standes der Technik aus Kunststoff und Metall sind Komponenten, die unter anderem im Fahrzeugbau und im Flugzeugbau sowie in der Elektronik und der Elektrotechnik als auch im Bereich Sport und Lifestyle im Bereich tragender Teile, kraftaufnehmender Teile oder als Teil des Gehäuses, bspw. für dekorative Zwecke, zum Einsatz kommen. Sie zeichnen sich insbesondere dadurch aus, dass sie lokale Verstärkungen aufweisen, die dem Bauteil besondere mechanische Eigenschaften verleihen, und/oder die Möglichkeit zur Funktionsintegration bieten. Besonders hervorzuheben ist die Erhöhung der Bauteilsteifigkeit bei zusätzlicher Gewichtsreduzierung im Vergleich zu bisher eingesetzten Komponenten in konventioneller Bauweise.

In den zuvor genannten Einsatzgebieten werden zunehmend Hybridbauteile eingesetzt, um eine Verringerung der Masse bei gleichzeitig optimierten mechanischen Eigenschaften zu erhalten. Der Nachteil dieser Hybridbauteile liegt in der fehlenden bzw. unzureichenden Haftung zwischen Metall und Kunststoff. Insofern wurden bisher mechanische Verankerungen des Kunststoffs am Metall durchgeführt.

Die Haftung zwischen Metall und Kunststoff kann durch Haftvermittler verbessert werden. Aus EP-A-1808468 und EP-A-2435246 sind Hybridbauteile bekannt, wobei Metall und Kunststoff durch Schmelzklebstoffe als Haftvermittler auf Copolyamid-Basis, die zusätzlich Isocyanat- und Epoxidgruppen enthalten, verbunden sind.

Weiterhin werden in US 4214019, US 4215159, US 4217376, US4219458, US4219459, US 4222976, US 4252712, EP0009950 und EP 0009951 Block-Copolymere wie Copolyester, Copolyamide, Copoly(esteramide) und Copoly(ether-ester) als Schmelzklebstoffe beschrieben. Sie ermöglichen eine Verbindung von Textil zu Metall.

DE 3730504 offenbart Copolyamide enthaltend Caprolactam und Laurinlactam, welche zum Heißsiegeln von Textilien verwendet werden können.

Der anhaltende Trend zu immer leichteren Strukturen bei gleichbleibender oder erhöhter Steifigkeit führt zu einem verstärkten Einsatz thermoplastischer Faserverbundwerkstoffe ("Composites") innerhalb der etablierten Kunststoff und/oder Metallstrukturen.

Auch bei Faserverbundwerkstoffen werden üblicherweise form- und/oder kraftschlüssige Verbindungselemente wie z.B. Durchspritzpunkte, Umspritzungen, Nieten, Schrauben, Igelstrukturen (beispielsweise T-Igel) etc. vorgenommen.

Der Nachteil form- und/oder kraftschlüssiger Verbindungselemente gegenüber stoffschlüssigen Elementen ist die lokal begrenzte Krafteinleitung. Zudem beeinflussen die erforderlichen Durchbrüche im Material die Kraftaufnahme und -verteilung.

Eine verbesserte Kraftübertragung bzw. -einleitung zwischen Werkstoffen kann durch stoffschlüssige Verbindungen erfolgen. Dabei kann auf Durchbrüche im Material, welche dieses schwächen, verzichtet werden, die beispielsweise für einen Formschluss notwendig sind. Eine stoffschlüssige Verbindung zwischen Faserverbundwerkstoffen und einem Kunststoff lässt sich im Spritzguss jedoch nur bei artgleichen oder besonders verträglichen Materialkombinationen etablieren, was die Auswahl an potentiellen Verbundpartnern stark einschränkt. Die Qualität der Verbindung hängt dabei entscheidend von den eingesetzten Prozessbedingungen (Temperatur, Zeit und Druck) ab. Alternativ kann eine stoffschlüssige Verbindung durch Schweißen oder einen geeigneten Haftvermittler, etwa auf Polyurethan-Basis, erzeugt werden.

Aufgabe der vorliegenden Erfindung war daher, ein Hybridbauteil umfassend mindestens einen Faserverbundwerkstoff zur Verfügung zu stellen, das durch stoffschlüssige Verbindung erhalten werden kann. Hierdurch sollte eine besonders hohe Haftung zwischen den jeweiligen, üblicherweise artfremden, Werkstoffen erzielt werden. Es sollte ein Hybridbauteil erhalten werden, dass gegenüber den bekannten Hybridbauteilen aus Metall und Kunststoff eine erhöhte Steifigkeit und/oder ein verringertes Gewicht bei zumindest annähernd gleichhoher Haftung aufweist.

Eine artgleiche Verbindung ist beispielsweise eine Verbindung zwischen Polyamid 12 und Polyamid 12 oder Stahl und Stahl. Eine artfremde Verbindung hingegen stellen beispielsweise die Kombinationen Stahl und Aluminium, Stahl und Polyamid 6 oder Polyamid 12 und Polyamid 6 dar. Die Begriffe "artfremd" und "artgleich" sind dem Fachmann bekannt.

Überraschend wurde gefunden, dass eine Beschichtung mit einer Haftvermittler-Zusammensetzung dazu führt, dass ein Faser-Kunststoff-Verbund als Faserverbundwerkstoff mit Werkstoffen A stoffschlüssig unter Erhalt eines Hybridbauteils miteinander verbunden werden kann.

Gegenstand der vorliegenden Erfindung ist demnach ein Hybridbauteil umfassend mindestens einen Faser-Kunststoff-Verbund als Werkstoff B und mindestens einen Werkstoff A, wobei der Werkstoff A ausgewählt ist aus Kunststoffen, keramischen Massen, Holz, Glas, Verbundwerkstoffen, textilen Fasern und aus textilen Fasern hergestellten Fertigfabrikaten. Die Fasern des Faser-Kunststoff-Verbundes sind aus Kohlenstoff-Fasern und Glasfasern ausgewählt. Die Materialien sind durch mindestens eine Beschichtung einer Haftvermittler-Zusammensetzung miteinander verbunden, wobei die Zusammensetzung mindestens einen Schmelzklebstoff auf Copolyamidbasis enthält.

Faserverbundwerkstoffe als Werkstoff B und Werkstoffe A zusammen werden im Folgenden als Werkstoffe bezeichnet.

Verbundwerkstoffe (Kompositwerkstoffe) können Teilchenverbundwerkstoffe, Faserverbundwerkstoffe, Schichtverbundwerkstoffe (Laminate), Durchdringungsverbundwerkstoffe und Strukturverbundwerkstoffe umfassen. Die Werkstoffe eines Verbundwerkstoffs können polymer, metallisch, keramisch oder organisch sein.

Als Teilchenverbundwerkstoffe werden beispielsweise Schleifscheiben (keramische Teilchen in einer polymeren oder Glasmatrix), Hartmetall (keramische Teilchen in einer metallischen Matrix), Keramikverbunde (keramische Teilchen in keramischer Matrix), Spanplatten (organische Teilchen in polymerer Matrix), Beton (keramische Teilchen in keramischer Matrix) oder Polymerbeton (mineralische Teilchen in polymerer Matrix) angesehen.

Die Matrix ist das Material des Verbundwerkstoffs, in das andere Bestandteile eingebettet sind.

Faserverbundwerkstoffe im Sinne der Erfindung sind beispielsweise glasfaserverstärktes Glas, Metallmatrix-Verbunde (MMC), Faserzement, kohlefaserverstärktes Siliciumcarbid, Faser-Kunststoff-Verbunde oder Faser-KeramikVerbunde (CMC). Bevorzugte Faserverbundwerkstoffe als Werkstoff A sind Faser-Kunststoff-Verbunde.

Zu den Schichtverbundwerkstoffen zählen Verbundplatten, Verbundrohre, TiGr-Composite (Werkstoff aus Titan, Kohlenstofffasern und Epoxidharz), glasfaserverstärktes Aluminium, Sandwichplatten mit Wabenkern, Bimetalle und Hylite.

Bevorzugte Werkstoffe A sind Kunststoffe und Faserverbundwerkstoffe. Demzufolge sind Hybridbauteile aus Faserverbundwerkstoff, besonders bevorzugt Faser-Kunststoff-Verbunde, als Werkstoff B und einem Werkstoff A, der ausgewählt ist aus Kunststoffen und Faserverbundwerkstoffen, besonders bevorzugt Faser-Kunststoff-Verbunde, bevorzugt.

Sofern sowohl Werkstoff A als auch Werkstoff B ein Faser-Kunststoff-Verbund ist, kann Werkstoff A zu Werkstoff B gleich oder verschieden sein.

Das erfindungsgemäße Hybridbauteil umfassend die Haftvermittler-Zusammensetzung, den Werkstoff A und den Werkstoff B kann darüber hinaus mit einem oder mehreren Werkstoffen C verbunden sein, welche zu dem Werkstoff A gleich oder verschieden sein können. Die weiteren Werkstoffe C können mittels Form-, Kraft- oder Stoffschluss mit dem erfindungsgemäßen Hybridbauteil verbunden sein, wobei ggf. eine Haftvermittler-Zusammensetzung eingesetzt werden kann.

Der Werkstoff C kann ausgewählt werden aus Kunststoffen, keramischen Massen, Holz, Glas, Verbundwerkstoffen, textilen Fasern und aus textilen Fasern hergestellten Fertigfabrikaten. Bevorzugte Werkstoffe C sind Kunststoffe und Faserverbundwerkstoffe.

Durch entsprechende Vorversuche kann der Fachmann ermitteln, ob zur Verbindung des erfindungsgemäßen Hybridbauteils mit weiteren Materialien eine Haftvermittler-Zusammensetzung nötig erscheint, so dass optimale Haftungseigenschaften erhalten werden.

Ein weiterer Gegenstand der Erfindung ist ein Verfahren zur Herstellung eines zuvor beschriebenen Hybridbauteils. Hierbei wird die Haftvermittler-Zusammensetzung zumindest teilweise auf mindestens einen der Werkstoffe A und/oder B aufgetragen bzw. aufgelegt und die Werkstoffe A und B miteinander verbunden. Der Auftrag der Haftvermittler-Zusammensetzung (im Folgenden auch als Zusammensetzung bezeichnet) kann vollflächig oder partiell auf einen der Werkstoffe erfolgen.

Sofern ein Werkstoff C zur Herstellung eines erweiterten Hybridbauteils zum Einsatz kommt, kann zunächst ein Hybridbauteil bestehend aus den Werkstoffen A und B hergestellt werden. Anschließend kann der Werkstoff C analog zu den Methoden der Werkstoffe A bzw. B aufgebracht bzw. aufgelegt und mit dem Hybridbauteil aus A und B verbunden werden. Alternativ können die Werkstoffe A, B und C gemeinsam (in einem Schritt) zur Herstellung des erweiterten Hybridbauteils verbunden werden.

Während der Herstellung des Hybridbauteils oder des erweiterten Hybridbauteils können verschiedene Fertigungsschritte wie Urformen, Umformen oder Spanen miteinander kombiniert und in einem Prozessschritt (integrative Fertigung) durchgeführt werden. Falls Kunststoff als Werkstoff B mit Werkstoff A verbunden werden soll, wird vorzugsweise der Kunststoff umgeformt und der Werkstoff A urgeformt.

Die Zusammensetzungen können appliziert oder als Folie aufgelegt werden. Die Applikation kann kontinuierlich oder diskontinuierlich mittels Elektrotauchlackieren, elektrostatischer Sprühverfahren, Wirbelsintern, Walzen (zum Beispiel Coil Coating), Gießen, Spritzen und Sprühen, Rakeln, Pinseln, Laminieren, (Heiß-)Pressen, (Co-) Extrusion oder Spritzgießen erfolgen, wobei Sprüh-Verfahren und Walzenauftragsverfahren bevorzugt sind. Hierbei können die Zusammensetzungen ein- oder beidseitig, lokal oder vollflächig aufgebracht werden. Die eingebrannten Schichtdicken (Trockenschichtdicken) der Haftvermittler-Zusammensetzungen können 10 bis 1000 µm, vorzugsweise 20 bis 250 µm und bevorzugt 30 bis 150 µm betragen. Im Walzenverfahren sind Schichtdicken von 5 µm bis 250 µm, insbesondere 10 µm bis 50 µm bevorzugt.

Der Werkstoff mit der aufgebrachten Haftvermittler-Zusammensetzung kann thermisch vernetzt bzw. getrocknet werden, wobei Objekttemperaturen von 120 °C bis 240 °C, vorzugsweise 150 °C bis 225 °C, bevorzugt 175 °C bis 200°C, für einen Zeitraum von 0,5 min bis 30 min, vorzugsweise von 1 min bis 20 min, bevorzugt 3 min bis 10 min, vorteilhaft sind. Der Fachmann kann geeignete Zeit-/Temperaturbedingungen über Vorversuche ermitteln. Bei Walzverfahren sind Peak-Metal-Temperaturen (PMT) von 180 °C bis 240 °C bevorzugt. Der Fachmann wird zur Realisierung der PMT die Anlagen- bzw. Bandgeschwindigkeit entsprechend einstellen.

Die Zusammensetzungen werden somit thermisch gehärtet.

Bevorzugte Hybridbauteile werden folgendermaßen erhalten:
A) der mit der Zusammensetzung beschichtete Faserverbundwerkstoff (Werkstoff B) wird mit dem Kunststoff (Werkstoff A) verbunden oder
B) der mit der Zusammensetzung beschichtete Kunststoff (Werkstoff A) wird mit dem Faserverbundwerkstoff (Werkstoff B) verbunden.
C) der mit der Zusammensetzung beschichtete Faserverbundwerkstoff (Werkstoff A) wird mit einem Faserverbundwerkstoff (Werkstoff B) verbunden.

In den Varianten A bis C sind Faser-Kunststoff-Verbunde besonders bevorzugte Faserverbundwerkstoffe. Die bevorzugten Hybridbauteile können um die Werkstoffe C erweitert werden.

### Variante A

Der Kunststoff (für den Verbund aus Faserverbundwerkstoff und Kunststoff) kann beispielsweise durch einen Spritzgießprozess einschließlich des Spritzprägeprozesses, Extrudieren oder durch Heißpressen auf den Faserverbundwerkstoff aufgebracht und der Faserverbundwerkstoff mit dem Kunststoff physikalisch und/oder chemisch verbunden werden. Vorzugsweise wird der Kunststoff mittels Spritzgusstechnologie eingespritzt. Hierzu wird das beschichtete Faserverbundwerkstoffteil in das Spritzgusswerkzeug eingelegt und nach dem Schließen des Werkzeugs mit dem Kunststoff hinterspritzt. Beim Kontakt der Kunststoffschmelze mit der beschichteten Faserverbundwerkstoffoberfläche bildet sich ein stoffschlüssiger Verbund bzw. die Haftung zwischen den Komponenten aus. Das stoffschlüssig verbundene Bauteil kann dann aus dem Spritzgießwerkzeug entformt und weiter ver- oder bearbeitet werden.

### Variante B

Der Faserverbundwerkstoff (für den Verbund aus Faserverbundwerkstoff und Kunststoff) kann beispielsweise durch Extrusion, Pultrusion, Pressen, Laminieren, Tapelegen, Wickeln, Spritzgießen oder Direktschmelzimprägnierung auf den Kunststoff aufgebracht und der Faserverbundwerkstoff mit dem Kunststoff physikalisch und/oder chemisch verbunden werden. Beim Kontakt des Faserverbundwerkstoffs mit der beschichteten Kunststoffoberfläche bildet sich ein stoffschlüssiger Verbund bzw. die Haftung zwischen den Komponenten aus.

### Variante C

Der eine Faserverbundwerkstoff (für den Verbund aus Faserverbundwerkstoff und Faserverbundwerkstoff) kann beispielsweise durch Extrusion, Pultrusion, Pressen, Laminieren, Tapelegen, Wickeln , Spritzgießen oder Direktschmelzimprägnierung auf den anderen Faserverbundwerkstoff aufgebracht und die beiden Faserverbundwerkstoff-Werkstoffe physikalisch und/oder chemisch verbunden werden. Beim Kontakt des einen Faserverbundwerkstoffs mit der beschichteten Oberfläche des anderen Faserverbundwerkstoffs bildet sich ein stoffschlüssiger Verbund bzw. die Haftung zwischen den Komponenten aus.

Durch die stoffschlüssige Verbindung zwischen dem Faserverbundwerkstoff als Werkstoff B und dem Werkstoff A kann eine deutlich günstige Kraftverteilung realisiert und in Folge dessen eine steifere Gesamtkonstruktion des Hybridbauteils erzeugt werden. Zudem lassen sich Kosten und Zeit bei der Herstellung einsparen.

Durch den stoffschlüssigen Verbund ergibt sich zudem der Vorteil der Gewichtsreduzierung, da durch die verbesserte Kraftübertragung und -einleitung im Gegensatz zu form- oder kraftschlüssigen Verbindungen eine geringere Menge an Kunststoff eingesetzt werden kann.

Anschließend kann die Kombination aus Werkstoff B und Werkstoff A sowie ggf. Werkstoff C für 2 min bis 90 min, vorzugsweise 5 min bis 60 min, bei 120 °C bis 240 °C zur Steigerung von Verbundhaftung und Vernetzungsgrad einer Wärmebehandlung unterzogen werden. Derartig hergestellte Hybridbautele weisen eine dauerhafte Verbindung zwischen dem mit der Zusammensetzung beschichteten Material und dem Kunststoff bzw. dem Faserverbundwerkstoff auf und zeigen eine hohe mechanische und dynamische Belastbarkeit.

Einen weiteren Gegenstand der Erfindung bildet die Verwendung der erfindungsgemäßen Hybridbauteile als Struktur- oder Leichtbauteile oder Bauteile mit Oberflächen- oder Schutz-Funktionen. Die Hybridbauteile können zudem dekorative Funktionen übernehmen.

Die erhaltenen Hybridbauteile können als Halbzeug in Form von Platten oder Profilen für die weitere Verarbeitung zu Bauteilen oder Komponenten eingesetzt werden. Hierunter fallen beispielsweise Sandwich-Platten umfassend mindestens drei Schichten, wovon die beiden Außenschichten gleich oder verschieden sein können. Sandwich-Platten können beispielsweise einen Faserverbundwerkstoff-Kern aufweisen.

Die Hybridbauteile können verwendet werden im Maschinen- und Anlagenbau, als Sitze im Fahr- oder Flugzeug, Stoßfänger, Rahmen- und Karosserieteile wie Frontendträger, Tür-, Dach-, Boden- oder Fahrwerkskomponenten, Bestandteile von Booten wie Rumpf oder Innenausbau, Zierleisten im Fahr- oder Flugzeug, Gehäuse oder Komponenten für elektronische oder elektrotechnische Geräte wie beispielsweise Computer oder Telefone, Zweiradkomponenten wie Gabeln, Rahmen, Bremsen, Schaltung, Orthesen, Prothesen, Gelenkverbindungen, Roboterbestandteile wie Roboterarme, Handling- und Transportsysteme, Aufnahmen für Lagerschalen, Brillenrahmen, Helme oder Sitzbefestigungs-, Sitzverstärkungs- oder Sitzverkleidungselemente im Fahrzeug- und Flugzeugbau, Druckbehälter wie Gasflaschen, Stützstrukturen für Behälter, Gerüste, Ölwannen, elektronische Komponenten wie Antennen oder Batteriegehäuse, Bauteile für die Energieerzeugung wie Photovoltaik- oder Windenergieanlagen, Maschinenelemente wie Zahnräder oder Zahnstangen. Rahmen, Profile, Fassadenelemente oder Führungsleisten von Fenstern und Türen im Bereich Hausbau und Architektur sind ebenso geeignete Verwendungsgebiete.

Einen weiteren Gegenstand der Erfindung bildet die Verwendung einer Zusammensetzung, die mindestens einen Schmelzklebstoff auf Copolyamidbasis enthält, als Haftvermittler zwischen einem Faserverbundwerkstoff als Werkstoff B und einem Werkstoff A zur Herstellung eines erfindungsgemäßen Hybridbauteils. Zudem kann die Zusammensetzung zur Herstellung eines erweiterten Hybridbauteils verwendet werden.

### Faserverbundwerkstoff

Ein Faserverbundwerkstoff ist ein aus Fasern und einer Matrix als Hauptkomponenten bestehender Mehrphasen- oder Mischwerkstoff. Durch gegenseitige Wechselwirkungen der beiden Komponenten erhält dieser Werkstoff höherwertige Eigenschaften als jede der beiden einzeln beteiligten Komponenten.

Geeignete Fasern sind beispielsweise anorganische Fasern wie Basaltfasern, Borfasern, Glasfasern, Keramikfasern oder Kieselsäurefasern, metallische Fasern wie Stahlfasern, organische Fasern wie Aramidfasern, Kohlenstofffasern, Polyesterfasern, Nylonfasern, Polyethylenfasern, Polymethylmethacrylat-Fasern, Polyimidfasern oder Fasern aus Polyaryletherketonen sowie Naturfasern wie Holzfasern, Flachsfasern, Hanffasern oder subtropische und tropische Fasern wie Jute-, Kenaf-, Ramie- oder Sisalfasern. Die obligatorischen Fasern werden aus Glas- und Kohlenstofffasern ausgewählt.

Die Fasern lassen sich folgendermaßen nach der Faserlänge unterteilen: Kurzfasern weisen eine Länge von etwa 0,1 bis 1 mm auf. Fasern mit einer Länge von etwa 1 bis 50 mm werden als Langfasern bezeichnet. Beträgt die Länge mehr als 50 mm, werden die Fasern als Endlosfasern bezeichnet. Als Länge wird die anzahlgemittelte mittlere Faserlänge in der Matrix nach der Faserverbundwerkstoff-Herstellung nach DIN ISO 22314 angesehen.

Vorzugsweise werden in dem Werkstoff B Lang- oder Endlosfasern eingesetzt. Bevorzugt weisen die Fasern eine Länge von mindestens 1,5 mm, besonders bevorzugt mindestens 5 mm und ganz besonders bevorzugt von mindestens 10 mm auf.

Die trockenen Fasern (ohne Matrix) können als Rovings oder Halbzeuge (Faserhalbzeuge) vorliegen. Die Halbzeuge können beispielsweise durch Weben, Flechten oder Sticken hergestellt werden. Zu den Faserhalbzeugen zählen beispielsweise Gewebe, Gelege einschließlich Multiaxialgelegen, Gestricke, Geflechte, Matten, Vliese, Feinschnitt oder Abstandsgewebe.

Als Roving wird ein Bündel, Strang oder Multifilamentgarn aus parallel angeordneten Filamenten (Endlosfasern) bezeichnet. Am häufigsten werden Filamente aus Glas, Aramid oder Kohlenstoff zu Rovings zusammengefasst. Der Querschnitt eines Rovings ist meist elliptisch oder rechteckig. Allerdings gibt es auch Rovings mit einer leichten Schutzdrehung (z.B. 10 Drehungen/m), wodurch der Querschnitt runder wird.

Die Faserverbundwerkstoffe lassen sich unterteilen in Faser-Kunststoff-Verbunde, in denen Polymere als Matrix eingesetzt werden, und andere Faserverbundwerkstoffe.

Die Matrix der anderen Faserverbundwerkstoffe wird üblicherweise ausgewählt aus Metallen, Keramiken und Kohlenstoff.

Als Matrix der Faser-Kunststoff-Verbunde werden üblicherweise Polymere wie Duromere, Elastomere und Thermoplaste ausgewählt, wobei Thermoplaste bevorzugt sind. Die Polymere können Verstärkungsstoffe oder Füllstoffe wie Talkum oder Kreide enthalten. Die Kunststoffe können weiterhin Additive enthalten wie beispielsweise Stabilisatoren, Schlagzähmodifikatoren, Fließhilfsmittel und Pigmente.

Besonders bevorzugte Thermoplaste sind z.B. Polybutylenterephthalate, Polyaryletherketone wie Polyetheretherketone, Polyolefine wie Polypropylen, Polyphenylensulfid, Polycarbonate, Polyetherimide, Polyurethane, aliphatische oder teilaromatische Polyamide, Kunststoffgemische enthaltend Polyamide, Styrolpolymere wie Acrylnitril-Butadien-Styrol, Polyalkyl(meth)acrylate wie Polymethylmethacrylat sowie Mischungen der vorgenannten Kunststoffe. Mischungen aus Polycarbonaten und Acrylnitril-Butadien-Styrol sind ebenfalls geeignet. Bevorzugt sind aliphatische oder teilaromatische Polyamide, Kunststoffgemische enthaltend Polyamide, Polybutylenterephthalate, Polyolefine sowie Mischungen der zuvor genannten Polymere, wobei Polyamide besonders bevorzugt sind.

Bevorzugte Polyamide (PA) werden ausgewählt aus der Gruppe bestehend aus Polyamid 6, Polyamid 6.6, Polyamid 610, Polyamid 612, Polyamid 613, Polyamid 614, Polyamid 106, Polyamid 1010, Polyamid 1012, Polyamid 1212, Polyamid 11, Polyamid 12, Polyphthalamiden, optischen transparenten Polyamiden oder Mischungen auf Basis dieser Polyamide. Besonders bevorzugte Polyamide sind ausgewählt aus Polyamid 6, Polyamid 6.6, Polyamid 12, Polyphthalamiden, optisch transparenten Polyamiden sowie deren Mischungen. Geeignete Polyamide werden beispielsweise unter der Bezeichnung VESTAMID LX9012 von der Fa. Evonik Industries angeboten.

Optisch transparente Polyamide umfassen mikrokristalline Polyamide enthaltend lineare aliphatische Dicarbonsäuren und cycloaliphatische Diamine, amorphe Polyamide enthaltend lineare aliphatische Dicarbonsäuren und cycloaliphatische Diamine und optional Lactame bzw. Aminocarbonsäuren, amorphe Polyamide enthaltend Terephthalsäure und cycloaliphatische oder verzweigte aliphatische Diamine und optional Lactame bzw. Aminocarbonsäuren oder amorphe Polyamide enthaltend Isophthalsäure und cycloaliphatische oder lineare oder verzweigte aliphatische Diamine und optional Lactame bzw. Aminocarbonsäuren. Geeignete optisch transparente Polyamide sind beispielsweise Amide aus Dodecandisäure und einem Isomerengemisch des 4,4'-Bis(aminocyclohexyl)-methans, aus Terephthalsäure und dem Isomerengemisch des 2,2,4- und 2,4,4-Trimethylhexamethylendiamins, aus Dodecandisäure und dem Isomerengemisch des 3-,3'-Dimethyl- 4,4'-bis(aminocyclohexyl)-methans, aus Laurinlactam, Isophthalsäure und dem Isomerengemisch des 3-,3'-Dimethyl- 4,4'-bis(aminocyclohexyl)-methans oder aus Tetradecandisäure und dem Isomerengemisch des 3-,3'-Dimethyl- 4,4'-bis(aminocyclohexyl)-methans. Derartige Polyamide werden beispielsweise in DE-A-102007062063 oder WO-A-2008025729 beschrieben. Optisch transparente Polyamide werden beispielsweise unter den Handelsnamen Trogamid (Evonik, Deutschland), Grilamid (EMS-Chemie, Deutschland) oder Durethan (Lanxess, Deutschland) angeboten.

Die Faserverbundwerkstoffe umfassen weiterhin eigenverstärkte Thermoplaste (Kunststofffasern in Kunststoffmatrix der gleichen Zusammensetzung).

Die zuvor genannten thermoplastischen Matrix-Polymere können zudem vernetzt sein.

Beispielsweise kann die Vernetzung während der Herstellung des Faserverbundwerkstoffs oder in einem Nachfolgeschritt erfolgen.

Geeignete Duroplasten sind beispielsweise Epoxidharze, ungesättigte Polyesterharze, Vinylesterharze, Phenacrylatharze, Phenolharze, Methacrylatharze oder Isocyanatharze (vgl. G. Ehrenstein: Faserverbund-Kunststoffe, Hanser-Verlag, 2. Auflage 2006, Seite 53 ff., ISBN 978-3-446-22716-3).

Besonders bevorzugte Faserverbundwerkstoffe werden aus kohlenstofffaserverstärkten Kunststoffen und glasfaserverstärkten Kunststoffen ausgewählt.

Die Fasern können in der Matrix gerichtet oder ungerichtet, vorzugsweise gerichtet, sein. Beispiele für Faserverbundwerkstoffe umfassend gerichtete Fasern sind UD-Gelege, UD-Tapes (UD = unidirektional) oder Gewebe. Ungerichtete Fasern sind beispielsweise in Vliesen enthalten.

Die Faser-Kunststoff-Verbunde können weiterhin als Faser-Matrix-Halbzeuge vorliegen. Diese können vorimprägniert sein. Vorimprägnierte Faser-Matrix-Halbzeuge umfassen insbesondere thermoplastische und duroplastische Halbzeuge. Die vorimprägnierte Faser-Matrix-Halbzeuge können in Platten-, Band- oder Strangform vorliegen.

Zu den thermoplastischen Halbzeugen zählen beispielsweise glasmattenverstärkte Thermoplaste (GMT), langfaserverstärkte Thermoplaste (LFG) oder thermoplastische preimpregnated fibres (Prepregs). Plattenförmige thermoplastische Prepregs werden auch als Organobleche bezeichnet (vgl. Tagungsband zur Fachtagung "Thermoplastische Faserverbundkunststoffe", 15.-16.05.2013 in Fürth, Carl Hanser Verlag München 2013, ISBN 978-3-446-43864-4, Seiten 5, 13 und17).

Duroplastische Halbzeuge sind zum Beispiel Sheet Molding Compounds (SMC), Bulk Molding Compounds (BMC) und duroplastische preimpregnated fibres (Pregreg).

Der Faserverbundwerkstoff kann vor dem Aufbringen des Werkstoffs A beschnitten, umgeformt oder verformt werden. Die Um- bzw. Verformung kann vor oder nach dem Auftrag der Haftvermittler-Zusammensetzung erfolgen.

Die Herstellung von Faserverbundwerkstoffen aus den zuvor beschriebenen Fasern und der Matrix ist dem Fachmann bekannt.

### Kunststoff

Das Aufbringen des Kunststoffs auf den Werkstoff B kann in bekannter Weise, z. B. durch Spritzgießen, Pressen, Laminieren, Hinterspritzen oder (Co-)Extrudieren erfolgen, wobei der Werkstoff bereits mit der Zusammensetzung beschichtet sein sollte. Vorzugsweise wird der Kunststoff mittels Spritzgusstechnologie eingespritzt. Der Werkstoff B kann in einem Bereich von 50 °C bis 250 °C vortemperiert sein, um die Temperatur im Kontaktbereich zum Kunststoff z.B. beim Überspritzen oder bei Coextrusion für eine gute Verbindung zwischen Haftvermittler und Kunststoff anzuheben.

Alternativ kann der Kunststoff bereits vorliegen, ggf. mit der Zusammensetzung beschichtet sein und anschließend mit dem Werkstoff B verbunden werden.

Geeignete Kunststoffe enthalten z.B. Polybutylenterephthalate, Polyolefine, Polyetherimide, Polycarbonate, Polyurethane, aliphatische oder teilaromatische Polyamide, Kunststoffgemische enthaltend Polyamide, Styrolpolymere wie Acrylnitril-Butadien-Styrol, Polyalkyl(meth)acrylate wie Polymethylmethacrylat, Polymethacrylimid (bspw. Rohacell von Evonik, Deutschland) sowie Mischungen der vorgenannten Kunststoffe. Mischungen aus Polycarbonaten, Acrylnitril-Butadien-Styrol oder Polyetherblockamide sind ebenfalls geeignet. Bevorzugt sind aliphatische oder teilaromatische Polyamide, Kunststoffgemische enthaltend Polyamide, Polybutylenterephthalate, Polyolefine sowie Mischungen der zuvor genannten Kunststoffe, wobei Polyamide besonders bevorzugt sind. Die Kunststoffe können verstärkt sein (Verstärkungsstoffe), wobei glasfaser- (GF) oder kohlenstofffaserverstärkte (CF) Kunststoffe bevorzugt sind. Zudem können die Kunststoffe Füllstoffe wie Talkum oder Kreide enthalten. Die Kunststoffe können weiterhin Additive enthalten wie beispielsweise Stabilisatoren, Schlagzähmodifikatoren, Fließhilfsmittel und Pigmente. Die Verstärkungsstoffe sind vorzugsweise ungerichtet in ihrer Matrix verteilt. Zudem weisen die Verstärkungsstoffe vorzugsweise eine Länge von weniger als 5 mm, bevorzugt weniger als 1 mm auf.

Bevorzugte Polyamide werden ausgewählt aus der Gruppe bestehend aus Polyamid 6, Polyamid 6.6, Polyamid 610, Polyamid 612, Polyamid 613, Polyamid 614, Polyamid 106, Polyamid 1010, Polyamid 1012, Polyamid 1212, Polyamid 11, Polyamid 12, Polyamid 101212, Polyphthalamiden oder Mischungen auf Basis dieser Polyamide. Besonders bevorzugte Polyamide sind ausgewählt aus Polyamid 6, Polyamid 6.6, Polyamid 610, Polyamid 1010 sowie deren Mischungen. Geeignete Polyamide werden beispielsweise unter der Bezeichnung VESTAMID LX9012 oder LGF30 von der Fa. Evonik Industries angeboten.

### Haftvermittler-Zusammensetzung

Die Haftvermittler-Zusammensetzung enthält mindestens einen Schmelzklebstoff auf Copolyamidbasis. Die Haftvermittler-Zusammensetzung kann in Lösung, in Dispersion oder als Feststoff vorliegen.

Der Schmelzklebstoff enthält mindestens ein Copolyamid. Das Copolyamid ist aus Amid-Monomeren und Comonomeren herstellbar. Durch die Comonomere werden vorzugsweise Copolyamide erhalten, die einen Schmelzpunkt zwischen 95 °C und 175 °C aufweisen.

Die Amid-Monomeren sind vorzugsweise ausgewählt sind aus der Gruppe bestehend aus Laurinlactam, Amionoundecansäure oder Mischungen daraus. Copolyamide auf Basis von Laurinlactam sind besonders bevorzugt.

Die Comonomere werden vorzugsweise ausgewählt aus aliphatischen oder cycloaliphatischen Diaminen, aliphatischen oder cycloaliphatischen Dicarbonsäuren, Lactamen und Mischungen daraus. Die Comonomere enthalten, unabhängig voneinander, vorzugsweise 4 bis 18 C-Atome. Geeignete Dicarbonsäuren sind beispielsweise Adipinsäure, Sebazinsäure oder Dodecandisäure. Geeignete Diamine stellen beispielsweise Hexamethylendiamin, Decamethylendiamin oder Dodecamethylendiamin dar. Lactame wie Caprolactam können ebenfalls als Comonomer eingesetzt werden.

Bevorzugte Comonomere sind Caprolactam und ein Polymer aus Adipinsäure und Hexamethylendiamin, vorzugsweise in einem Massenverhältnis von 1:1.

Durch einen Überschuss an Amingruppen der Diamine resultieren Copolyamide mit reaktiven Aminoendgruppen.

Die Copolyamide weisen vorzugsweise Aminzahlen von 75 bis 400 mmol/kg auf.

Das gewichtsmittlere Molekulargewicht der Copolyamide ist vorzugsweise in einem Bereich von 15000 bis 70000 g/mol anzufinden (gemessen mittels Gelpermeationschromatographie (GPC) gegen einen Polystyrolstandard). Die relative Lösungsviskosität beträgt vorzugsweise 1,2 bis 1,8 (Bestimmung nach ISO 307).

Die Copolyamide bzw. der Schmelzklebstoff können in den Zusammensetzungen in Lösung, in Dispersion oder in Pulverform eingesetzt werden, wobei die Pulverform bevorzugt ist. Ein geeignetes Lösemittel ist beispielsweise m-Kresol.

Die Pulverform kann beispielsweise durch Vermahlen erhalten werden, wobei der Korndurchmesser vorzugsweise < 200 µm, bevorzugt < 100 µm und besonders bevorzugt < 70 µm ist (Siebanalyse).

In einer bevorzugten Ausführungsform der Erfindung sind dem Copolyamid mindestens eine Epoxidkomponente und mindestens ein blockiertes Polyisocyanat als weitere Bestandteile des Schmelzklebers zugesetzt.

Typischerweise weist die Epoxidkomponente einen Epoxy-Index von 1-2 Eq/kg auf. Das Epoxid-Äquivalentgewicht der eingesetzten Epoxidharze kann zwischen 400 bis 4000 g/mol, vorzugsweise 700 bis 3000 g/mol und bevorzugt zwischen 875 und 1000 g/mol liegen (bestimmt nach SMS 2026).

Der Anteil an OH-Gruppen geeigneter Epoxidharze beträgt vorzugsweise 2000 bis 4500 mmol/kg, bevorzugt 2300 bis 4000 mmol/kg (Methode SMS 2367). Als Epoxidkomponente können beispielsweise Verbindungen auf Basis von Diolen, Polyolen oder Dicarbonsäuren eingesetzt werden, wobei Diole bevorzugt und entsprechende Phenol-Diol-Derivate besonders bevorzugt sind. Ganz besonders bevorzugte Phenol-Diol-Derivate sind Bisphenole, insbesondere Bisphenol A. Die Epoxidkomponente wird üblicherweise erhalten durch Umsetzung mit Epichlorhydrin.

Geeignete Epoxidharze haben eine Dichte von 1 bis 1,3 kg/L, bevorzugt 1,15 bis 1,25 kg/L (25 °C; bestimmt nach ASTM D792). Die Glasübergangstemperatur (Tg) kann 20 °C bis 100 °C betragen, vorzugsweise 25 °C bis 90 °C, bevorzugt 40 °C bis 60 °C und besonders bevorzugt 45 bis 55 °C (Bestimmung nach ASTM D3418). Der Schmelzbereich liegt üblicherweise im Bereich von 45 °C bis 150 °C (nach DIN 53181). Geeignete Epxidharze sind beispielsweise unter den Bezeichnungen EPIKOTE Resin wie etwa EPIKOTE Resin 1001 oder 1009 der Hexion Specialty Chemicals, Inc. erhältlich.

Der Schmelzklebstoff enthält die Epoxidkomponente vorzugsweise in einem Anteil von 2,5 bis 10 Gew.-%, bevorzugt 4 bis 6 Gew.-%, jeweils bezogen auf das Gesamtgewicht des Schmelzklebstoffs.

Der Schmelzklebstoff weiterhin Härter wie Dicyandiamid (DCD), vorzugsweise in Anteilen von 3 bis 6 Gew.-%, bezogen auf das Gesamtgewicht an Epoxidharz, enthalten. Zur Härtungsbeschleunigung können Harnstoffderivate wie Monuron oder Fenuron zugesetzt werden, wodurch die Härtungstemperaturen abgesenkt bzw. die Härtungszeiten verkürzt werden können.

Der Anteil an blockiertem Polyisocyanat beträgt vorzugsweise 2,5 bis 15 Gew.-%, bevorzugt 4 bis 6 Gew.-%, jeweils bezogen auf das Gesamtgewicht des Schmelzklebstoffs.

Die blockierte Polyisocyanatkomponente kann aromatisch, aliphatisch oder cycloaliphatisch sein, wobei aliphatische oder cycloaliphatische Polyisocyanate bevorzugt sind. Blockierungsmittel für Isocyanate wie Oxime, Phenole oder Caprolactam sind dem Fachmann bekannt. Bevorzugt liegt die Polyisocyanatkomponente als Uretdion vor, um blockiert zu sein. Typische Beispiele werden unter der Bezeichnung VESTAGON von Evonik Industries, Deutschland, vertrieben.

Die Haftvermittler-Zusammensetzung kann selbst- oder fremdvernetzende Bindemittel enthalten (zu dem Begriff "Bindemittel" vgl. Römpp Lexikon Lacke und Druckfarben, Georg Thieme Verlag, Stuttgart, New York, 1998, Bindemittel, Seiten 73 und 74). Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, dass in den Bindemitteln komplementäre reaktive funktionelle Gruppen enthalten sind, die miteinander reagieren und so zu einer Vernetzung führen. Oder aber die Bindemittel enthalten reaktive funktionelle Gruppe die "mit sich selbst" reagieren. Als fremdvernetzend werden dagegen solche Bindemittel-Systeme bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, Härtung, Seiten 274 bis 276, insbesondere Seite 275, unten, verwiesen.

Die Haftvermittler-Zusammensetzung kann weiterhin elektrisch leitfähige Stoffe enthalten, die ausgewählt sind aus Graphit, Ruß, Zinkstaub oder Mischungen dieser Stoffe, wodurch elektrisch leitfähige Haftvermittler-Zusammensetzungen entstehen.

Die Haftvermittler-Zusammensetzungen können weiterhin Farbmittel, vorzugsweise Pigmente, enthalten. Darüber hinaus können funktionelle Pigmente wie Korrosionsschutzpigmente enthalten sein.

Die Haftvermittler-Zusammensetzung kann weiterhin funktionalisierte Polyolefine enthalten, um die Haftung zu Polyolefinen zu verbessern. Derartige Zusammensetzungen werden beispielsweise in WO 2010/136241 beschrieben.

Geeignete Schmelzklebstoffe werden beispielsweise von der Firma Evonik Industries, Deutschland, unter der Bezeichnung VESTAMELT angeboten. Beispielsweise seien die Typen X1027-P1, X1038-P1, X1316-P1 und X1333-P1 genannt.

Neben dem Schmelzklebstoff können darüber hinaus Propfcopolymere aus Polyamin und polamidbildenden Monomern wie Lactamen bzw. ω-Aminocarbonsäuren enthalten sein, wie sie in EP1065236A2 beschrieben sind:
Beim Pfropfcopolymer liegt die Aminogruppenkonzentration bevorzugt im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE-OS 196 54 058);
- Dendrimere wie beispielsweise ((H₂N-(CH₂)₃)₂N-(CH₂)₃)₂-N(CH₂)₂-N((CH₂)₂-N((CH₂)₃-NH₂)₂)₂ (DE-A-196 54 179) oder Tris(2-aminoethyl)amin, N,N-Bis(2-aminoethyl)-N',N'-bis[2-[bis(2-aminoethyl)amino]ethyl]-1,2-ethandiamin, 3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam und Laurinlactam bzw. der zugehörigen ω-Aminocarbonsäuren eingesetzt. Das Molverhältnis C12/C6-Baustein liegt bevorzugt zwischen 4:1 bis 1:4. Das Massenverhältnis Schmelzklebstoff zu Pfropfcopolymer liegt bevorzugt zwischen 19:1 und 1:1.

Das funktionalisierte Polyolefin ist im einfachsten Fall polypropylenbasiert. Es eignen sich aber auch Etylen / C₃- bis C₁₂-α-Olefin-Copolymere. Als C₃- bis C₁₂-α-Olefin wird beispielsweise Propen, 1-Buten, 1-Penten 1-Hexen, 1-Octen, 1-Decen oder 1-Dodecen eingesetzt. Weiterhin können die Etylen / C₃- bis C₁₂-α-Olefin-Copolymere auch bis maximal etwa 10 Gew.-% Olefindiene wie beispielsweise Ethylidennorbornen oder 1,4-Hexadien enthalten. Als Funktionalisierung dienen bevorzugt Säureanhydridgruppierungen, die auf bekannte Weise durch thermische oder radikalische Reaktionen des Hauptkettenpolymers mit einem ungesättigten Dicarbonsäureanhydrid oder einer ungesättigten Dicarbonsäure eingebracht werden. Geeignete Reagenzien sind beispielsweise Maleinsäureanhydrid oder Itaconsäureanhydrid. Auf diese Weise werden 0,1 bis 4 Gew.-%, bezogen auf das Gesamtgewicht der funktionalisierten Polyolefine, aufgepropft, was auch zusammen mit einem weiteren Monomer wie beispielsweise Styrol erfolgen kann.

Die Verwendung von maleinsäuregepfropten Polyolefinen hat weite Verbreitung für industrielle Anwendungen gefunden, insbesondere für schlagzähe Modifikationen oder als Verträglichkeitsvermittler in Blends und mechanisch verstärkten Systemen (Polymer, 2001, 42, 3649-3655 und zitierte Literatur). Genannte Quelle beschreibt beispielhaft auch die Herstellung derartiger funktionalisierter Polyolefine.

Einen typischen Vertreter für ein funktionalisiertes Polyolefin stellt das polypropylenbasierte, säureanhydridgepfropfte Admer QB 520 E (Mitsui Chemicals) dar. Prinzipiell einsetzbar sind auch leichter fließende, mit Maleinsaure gepfropfte Polypropylene der Fa. Kometra (z.B. SCONA TPPP 8012).

Eine weitere Funktionalisierungsmöglichkeit besteht in der Schmelzemischung unfunktionalisierter Polyolefine mit reaktiven Verträglichkeitsvermittlern, die Epoxid- oder Carbonsäureanhydridgruppierungen enthalten. Typische Beispiele stellen Copolymerisate bestehend aus Ethylen, einem oder mehreren nicht reaktiven acrylischen Monomeren mit Maleinsäureanhydrid oder Glycidylmethacrylat dar. Lotader AX8900 (Arkema) stellt einen typischen Vertreter mit Glycidylmethacrylat-Einheiten dar.

Das Verhältnis Polyamid-Komponente zu Polyolefinkomponente liegt zwischen 9 zu 1 und 2 zu 3.

Nachfolgend wird die vorliegende Erfindung anhand von Beispielen näher erläutert. Alternative Ausführungsformen der vorliegenden Erfindung sind in analoger Weise erhältlich.

### Beispiele

### A) Hybridbauteil aus Faserverbundwerkstoff und Metall (nicht erfindungsgemäß)

### 1. Aufbau: Metall - Haftvermittler-Beschichtung - Faserverbundwerkstoff - Kunststoff (erweitertes Hybridbauteil)

Unvorbehandelte Blechplatten (Blechstärke 1,5 mm) aus Stahl ZSTE 800 nach DIN EN10142 wurden per Konvertierungsmittel phosphatiert. Als Konvertierungsmittel wurde Granodine 958 A der Firma Henkel, Deutschland, enthaltend unter anderem Phosphorsäure und Zinkbis(dihydrogenphosphat) und eine Nachpassivierung aus Deoxylyte 54NC eingesetzt.

Nach dem Aufbringen der Konversionslösung gemäß Herstellerangabe mittels Tauchen in die Lösungen und Trocknen der Schichten wurden die Metallproben mit einer Haftvermittler-Zusammensetzung beschichtet. Als Zusammensetzung wurden appliziert
- H1: Lösemittelhaltiger Sprühlack enthaltend ca. 30 Gew.-% eines Schmelzklebstoffs auf Copolyamidbasis, enthaltend eine Epoxidkomponente und ein blockiertes Polyisocyanat, und
- H2: Schmelzklebstoff auf Copolyamidbasis (Vestamelt X1333-P1 der Fa. Evonik), enthaltend eine Epoxidkomponente und ein blockiertes Polyisocyanat als Pulverbeschichtung.

Die beiden Zusammensetzungen H1 und H2 enthalten das gleiche Copolyamid.

Das Lacksystem wurde im Sprühverfahren mit einer Schichtdicke von 50 - 70 µm und die Pulverbeschichtung elektrostatisch mit einer Schichtstärke von 50 - 100 µm aufgetragen. Der Sprühlack wurde für 5 min bei 175 °C und die Pulverbeschichtung für 5 min bei 200°C eingebrannt. Die beschichteten Bleche wurden hierzu in einen vorgeheizten Autoklaven (Ofen) gelegt.

Nach dem Einbrennvorgang wurden die Blechtafeln mit einer Schlagschere in, für die Spritzgusskavität passende, Blechstreifen mit den Maßen 20,0 mm x 50,0 mm (Toleranz +0 -0,2 mm) geschnitten.

Als Einleger aus Faserverbundwerkstoff wurden endlos-kohlefaserverstärkte UD-Tapes mit einer Matrix aus Polyamid 12. Die UD-Tapes besitzen eine Matrix aus Polyamid 12. Die UD-Tapes wurden ebenfalls auf ein für die Spritzgusskavität passendes Maß von ca. 20,0 mm x 50,0 mm mittels einer Schlagschere zugeschnitten.

Die Blechstreifen wurden dann zur Herstellung der endgültigen Hybridbauteile mit und ohne Faserverbundwerkstoff-Einleger in ein temperiertes Spritzgießwerkzeug eingelegt und mit einem thermoplastischen Kunststoff überspritzt. Die Faserverbundwerkstoff-Einleger wurden dabei lose auf den Blechstreifen abgelegt. Als Kunststoffkomponente wurde ein Polyamid 12 GF30 (VESTAMID L-GF30 der Firma Evonik Industries AG, Deutschland) eingesetzt.

Die Verarbeitung des Kunststoffs erfolgte auf einer Arburg 370V bei einer Massetemperatur von 280°C, einer Werkzeugtemperatur von 120°C und bei einer Einspritzgeschwindigkeit von ca. 30 ccm/s. Wichtig war hierbei eine Einspritzverzögerung von ca. 30 s vorzusehen, damit der eingelegte Blechstreifen und Composite-Einleger auf Werkzeugtemperatur vorgewärmt werden konnten, wodurch die Haftung positiv begünstigt wurde. Der Überlappungsbereich zwischen Kunststoff und Metall betrugen ca. 20 mm x 20 mm. Der Probekörper besaß eine Gesamtlänge von ca. 100mm. Die Dicke des überspritzten Kunststoffs betrug ca. 6 mm, im Bereich der Überlappung ca. 4 mm. Nach dem Entformen wurden die einzelnen Zug-Scher-Probekörper vom Anguss getrennt.

Die so erzeugten Prüfkörper wurden bei 50 % relativer Luftfeuchte für mindestens für 24 h bei 23 °C gelagert, um einen einheitlichen Konditionierungszustand zu gewährleisten. Die Probekörper werden dann in eine Standard-Zugprüfmaschine Zwick/Roell Z-020 eingespannt und mit einer Geschwindigkeit von 5 mm/min bei 23 °C mit einem Abstand zwischen den Klemmen und dem Überlappungsbereich von ca. 15 mm / Seite geprüft.

| **Beispiel** | **Faserverbundwerkstoff** | **Haftvermittler** | **Haftung in MPa** |
|---|---|---|---|
| 1 | ohne | ohne | 0 |
| 2 | ohne | H1 | 8,8 |
| 3 | mit | ohne | 0 |
| 4* | mit | H1 | 8,5 |
| 5 | ohne | ohne | 0 |
| 6 | ohne | H2 | 10,6 |
| 7 | mit | ohne | 0 |
| 8* | mit | H2 | 9,3 |

| | | | |
|---|---|---|---|
| * erfindungsgemäß | | | |

Die Ergebnisse zeigen, dass durch eine Haftvermittlerbeschichtung der Metallkomponente eine erhöhte Haftfestigkeit zwischen UD-Tape und Metall in Hybridbauteilen gegenüber Systemen ohne Haftvermittler erreicht werden kann. Zudem wird dargelegt, dass durch den Einsatz des Faserverbundwerkstoffs keine signifikante Verringerung der Haftung erreicht wird.

### 2. Aufbau: Metall - Haftvermittler-Beschichtung - Faserverbundwerkstoff

Unvorbehandelte Blechplatten (Blechstärke 1,0 mm) wurden per Konvertierungsmittel phosphatiert bzw. chromatiert. Als Konvertierungsmittel wurde Granodine 958 A der Firma Henkel, Deutschland für verzinkte Stahlbleche DX56D Z140 nach DIN EN 10346 (M1), enthaltend unter anderem Phosphorsäure und Zinkbis(dihydrogenphosphat) und eine Nachpassivierung aus Deoxylyte 54NC eingesetzt. Für Aluminiumbleche AlMg3 EN AW-5754 H111 nach DIN EN 573-3 (M2) wurde eine Konversionsschicht (Chromatierung) aus Alodine 1225 der Firma Henkel, Deutschland eingesetzt.

Nach dem Aufbringen der Konversionslösung gemäß Herstellerangabe mittels Tauchen in die Lösungen und Trocknen der Schichten wurden die Metallproben mit einer Haftvermittler-Zusammensetzung beschichtet. Als Zusammensetzung wurden appliziert:
- H1: Schmelzklebstoff auf Copolyamidbasis (Vestamelt X1333-P1 der Fa. Evonik), enthaltend eine Epoxidkomponente und ein blockiertes Polyisocyanat als Pulverbeschichtung und
- H2: Lösemittelhaltiger Sprühlack enthaltend ca. 30 Gew.-% eines Schmelzklebstoffs auf Copolyamidbasis, enthaltend eine Epoxidkomponente und ein blockiertes Polyisocyanat.

Die beiden Zusammensetzungen H1 und H2 enthalten das gleiche Copolyamid.

Das Lacksystem wurde im Sprühverfahren mit einer Schichtdicke von 50 - 70 µm und die Pulverbeschichtung elektrostatisch mit einer Schichtstärke von 50 - 100 µm aufgetragen. Der Sprühlack wurde für 5 min bei 175 °C und die Pulverbeschichtung für 5 min bei 200°C eingebrannt. Die beschichteten Bleche wurden hierzu in einen vorgeheizten Autoklaven (Ofen) gelegt.

Nach dem Einbrennvorgang wurden die Blechtafeln mit einer Schlagschere in, für den Pressvorgang passende, Blechstreifen mit den Maßen von ca. 60,0 mm x 25,0 mm (Toleranz +0 -0,2 mm) geschnitten.

Als Verbundpartner wurden endlosfaserverstärkte Faserverbundwerkstoffe verwendet. Die Faserverbundwerkstoffe wurden ebenfalls auf ein, für den Pressvorgang passendes, Maß von ca. 60,0 mm x 25,0 mm mittels einer Schlagschere zugeschnitten. Folgende Faserverbundkunststoffe wurden eingesetzt:
- C1: Faserverbundwerkstoff aus VESTAMID L1600 (Polyamid 12) und Kohlenstofffasergewebe mit Endlosfasern. Das Gewebe besitzt ein Gewicht von ca. 285 g/m² mit einer Orientierung von 0°/90°. Die Faserverbundwerkstoff-Platten wurden im Pressverfahren hergestellt.
- C2: Faserverbundwerkstoff dynalite 102-FG290 (4)/45 % Typ C (PA6) und Glasfasergewebe mit Endlosfasern der Fa. Bond-Laminates GmbH, Deutschland. Der Faserverbundkunststoff besitzt ein Faservolumengehalt von ca. 45 vol.-% mit einer Orientierung von 0°/90°.
- C3: Faserverbundwerkstoff aus Epoxydharz (Entwicklungsprodukt Evonik) und Kohlenstofffasergewebe mit Endlosfasern. Das Gewebe besitzt ein Gewicht von ca. 250 g/m² mit einer Orientierung von 0°/90°. Die Faserverbundwerkstoff-Platten wurden im Pressverfahren hergestellt.
- C4: Faserverbundwerkstoff aus Polyurethanharz (Entwicklungsprodukt Evonik) und Kohlenstofffasergewebe mit Endlosfasern. Das Gewebe besitzt ein Gewicht von ca. 200 g/m² mit einer Orientierung von 0°/90°. Die Faserverbundwerkstoff-Platten wurden im Pressverfahren hergestellt.

Der Erhalt der Verbindung zwischen beschichtetem Metall und Faserverbundkunststoff erfolgte durch einen Pressvorgang in einer hydraulischen Heißpresse (Hersteller Paul Weber, Bezeichnung TEMPRESS). Dabei wird in eine Hälfte der Heißpresse das beschichtete Metallblech mit den Maßen von ca. 60x25x1 mm in eine Schablone eingelegt, Darauf wird eine Platte aus einem Faserverbundwerkstoff mit den Maßen 60x25x1 mm positioniert. Die blechseitige Hälfte der Presse wird auf ca. 220°C erhitzt. Im Anschluss werden der Faserverbundwerkstoff und das beschichtete Metallblech bei einem Druck von ca. 32 bar und einer Haltezeit von ca. 5min zu einem Verbundkörper verpresst. Der Überlappungsbereich zwischen Kunststoff und Metall betrugen ca. 25 mm x 25 mm. Der Probekörper besaß eine Gesamtlänge von ca. 130mm.

Die so erzeugten Prüfkörper wurden bei 50 % relativer Luftfeuchte für mindestens für 24 h bei 23 °C gelagert, um einen einheitlichen Konditionierungszustand zu gewährleisten. Die Probekörper werden dann in eine Standard-Zugprüfmaschine Zwick/Roell Z-020 eingespannt und mit einer Geschwindigkeit von 5 mm/min bei 23 °C mit einem Abstand zwischen den Klemmen und dem Überlappungsbereich von ca. 15 mm / Seite geprüft.

| **Beispiel** | **Metall** | **Haftverm ittler** | **Faserverbundwerkstoff** | **Haftung in MPa** |
|---|---|---|---|---|
| 9 | M1 | ohne | C1 | 2,8 |
| 10* | M1 | H1 | C1 | 8,7 |
| 11* | M1 | H2 | C1 | 8,9 |
| 12 | M2 | ohne | C1 | 3,6 |
| 13* | M2 | H1 | C1 | 7,8 |
| 14* | M2 | H2 | C1 | 7,8 |
| 15 | M1 | ohne | C2 | n. m. |
| 16* | M1 | H1 | C2 | 7,6 |
| 17* | M1 | H2 | C2 | 8,5 |
| 18 | M2 | ohne | C2 | n. m. |
| 19* | M2 | H1 | C2 | 7,5 |
| 20* | M2 | H2 | C2 | 8,0 |
| 21 | M1 | ohne | C3 | n. m. |
| 22* | M1 | H1 | C3 | 9,1 |
| 23 | M2 | ohne | C3 | n. m. |
| 24* | M2 | H1 | C3 | 8,6 |
| 25 | M1 | ohne | C4 | n. m. |
| 26* | M1 | H1 | C4 | 8,0 |
| 27 | M2 | ohne | C4 | n. m. |
| 28* | M2 | H1 | C4 | 6,0 |

| | | | | |
|---|---|---|---|---|
| * erfindungsgemäß; n. m. = nicht messbar (keine Haftung) | | | | |

### B) Hybridbauteil aus Faserverbundwerkstoff und Kunststoff

### Aufbau: Faserverbundwerkstoff - Haftvermittler - Kunststoff

Zur Herstellung eines Verbundkörper aus einem Faserbundwerkstoff und Kunststoffes mittel einer Haftvermittler-Zusammensetzung wurden verschiedene 1,0 mm starke Faserverbundwerkstoff-Platten eingesetzt::
- C1: Faserverbundwerkstoff aus VESTAMID L1600 (Polyamid 12) und Kohlenstofffasergewebe mit Endlosfasern. Das Gewebe besitzt ein Gewicht von ca. 285 g/m² mit einer Orientierung von 0°/90°. Die Faserverbundwerkstoff-Platten wurden im Pressverfahren hergestellt.
- C2: Faserverbundwerkstoff aus TROGAMID CX7323 (PACM 12) und Glasfasergewebe mit Endlosfasern. Das Gewebe besitzt ein Gewicht von ca. 285 g/m² mit einer Orientierung von 0°/90°. Die Faserverbundwerkstoff-Platten wurden im Pressverfahren hergestellt.
- C3: Faserverbundwerkstoff aus Epoxydharz (Entwicklungsprodukt Evonik) und Kohlenstofffasergewebe mit Endlosfasern. Das Gewebe besitzt ein Gewicht von ca. 250 g/m² mit einer Orientierung von 0°/90°. Die Faserverbundwerkstoff-Platten wurden im Pressverfahren hergestellt.
- C4: Faserverbundwerkstoff dynalite (Polybutylenterephthalat PBT) und Kohlenstofffasergewebe mit Endlosfasern der Fa. Bond-Laminates GmbH, Deutschland. Der Faserverbundkunststoff besitzt ein Faservolumengehaltt von ca. 45 vol.-% mit einer Orientierung von 0°/90°.

Die Platten wurden mit je einer Haftvermittler-Zusammensetzung beschichtet. Als Zusammensetzung wurden appliziert
- H1: Schmelzklebstoff auf Copolyamidbasis (Vestamelt X1333-P1 der Fa. Evonik), enthaltend eine Epoxidkomponente und ein blockiertes Polyisocyanat als Pulverbeschichtung, und
- H2: Schmelzklebstoff auf Copolyamidbasis (Vestamelt Z2366-P1 der Fa. Evonik), enthaltend eine Epoxidkomponente und ein blockiertes Polyisocyanat sowie ein funktionalisiertes Polyolefin als Pulverbeschichtung.

Die beiden Zusammensetzungen H1 und H2 enthalten das gleiche Copolyamid.

Die Pulverbeschichtung wurde elektrostatisch mit einer Schichtstärke von 50 - 70 µm aufgetragen und für 5 min bei 160°C eingebrannt. Die beschichteten Bleche wurden hierzu in einen vorgeheizten Autoklaven (Ofen) gelegt.

Nach dem Einbrennvorgang wurden die Faserverbundwerkstoff-Platten mit einer Schlagschere in, für die Spritzgusskavität passende, Blechstreifen mit den Maßen 24,9 mm x 59,8 mm (Toleranz ±0,2 mm) geschnitten.

Die Faserverbundwerkstoff-Platten wurden dann zur Herstellung der endgültigen Hybridbauteile in ein temperiertes Spritzgießwerkzeug eingelegt und mit einem thermoplastischen Kunststoff überspritzt. Als Kunststoffkomponenten wurden folgende Formmassen eingesetzt:
- K1: Polyamid 6 GF30 (Durethan BKV30 H2.0 der Firma Lanxess, Deutschland)
- K2: Langglasfaserverstärktes Polypropylen LGF30 (CELSTRAN PP-GF30-05CN01 der Fa. TICONA)
- K3: PACM 12 (TROGAMID CX7323 der Evonik Industries AG)
- K4: PA1010 GF65 (wärmestabilisiertes, mit 65 % Glasfasern verstärkt Polyamid der Evonik Industries AG)

Die Verarbeitung der Kunststoffe erfolgte auf einer Arburg Spritzgießmaschine Typ Allrounder 420 C bei einer Massetemperatur von 280°C, einer Werkzeugtemperatur von 80°C bzw. 120°C und bei einer Einspritzgeschwindigkeit von ca. 30 ccm/s.. Für das Polypropylen LGF30 wurde eine Massetemperatur von 270°C, eine Werkzeugtemperatur von 70°C und eine Einspritzgeschwindigkeit von ca. 30 ccm/s verwendet. Wichtig war hierbei eine Einspritzverzögerung von ca. 15-30 s vorzusehen, damit die eingelegte Faserverbundwerkstoff-Platte auf Werkzeugtemperatur vorgewärmt werden konnte, wodurch die Haftung positiv begünstigt wurde. Der Überlappungsbereich zwischen Kunststoff und Faserverbundkunststoff betrug ca. 25 mm x 25 mm. Der Probekörper besaß eine Gesamtlänge von ca. 130mm. Die Dicke des überspritzten Kunststoffs betrug ca. 4 mm. Nach dem Entformen wurden die einzelnen Zug-Scher-Probekörper vom Anguss getrennt.

Die so erzeugten Prüfkörper wurden bei 50 % relativer Luftfeuchte für mindestens für 24 h bei 23 °C gelagert, um einen einheitlichen Konditionierungszustand zu gewährleisten. Die Probekörper werden dann in eine Standard-Zugprüfmaschine Zwick/Roell Z-020 eingespannt und mit einer Geschwindigkeit von 5 mm/min bei 23 °C mit einem Abstand zwischen den Klemmen und dem Überlappungsbereich von ca. 25 mm / Seite geprüft.

| **Beispiel** | **Kunststoff** | **Faserverbundkunststoff** | **Haftvermittler** | **Werkzeugtemperatur in °C** | **Haftung in MPa** |
|---|---|---|---|---|---|
| 29 | K1 | C1 | ohne | 80 | 2,6 |
| 30 | K1 | C1 | ohne | 120 | 3,6 |
| 31* | K1 | C1 | H1 | 80 | 9,3 |
| 32* | K1 | C1 | H1 | 120 | 12,4 |
| 33 | K2 | C1 | ohne | 70 | 0,6 |
| 34* | K2 | C1 | H2 | 70 | 5,2 |
| 35 | K3 | C2 | ohne | 80 | k. A. |
| 36* | K3 | C2 | H1 | 80 | 2,3 |
| 37 | K4 | C3 | ohne | 80 | Materialbruch |
| 38* | K4 | C3 | H1 | 80 | Materialbruch |
| 39 | K4 | C4 | Ohne | 80 | n. m. |
| 40* | K4 | C4 | H1 | 80 | 5,8 |

| | | | | | |
|---|---|---|---|---|---|
| * erfindungsgemäß; k. A.: keine Angabe; n. m.: nicht messbar: (keine Haftung) | | | | | |

Die Ergebnisse zeigen, dass durch die Haftvermittlervarianten eine erhöhte Haftfestigkeit zwischen Faserverbundwerkstoff-Platten und artfremden Kunststoff in Hybridbauteilen gegenüber Systemen ohne Haftvermittler erreicht werden kann.

### C) Hybridbauteil aus Faserverbundwerkstoff und Metall (nicht erfindungsgemäß)

### Aufbau: Faserverbundwerkstoff - Haftvermittler - Metall

Zum Erhalt eines Verbundes aus beschichtetem Faserverbundwerkstoff und Metall wurden verschiedene 1,0 mm starke Faserverbundwerkstoff-Platten eingesetzt:
- C1: Faserverbundwerkstoff aus VESTAMID L1600 (Polyamid 12) und Kohlenstofffasergewebe mit Endlosfasern. Das Gewebe besitzt ein Gewicht von ca. 285 g/m² mit einer Orientierung von 0°/90°. Die Faserverbundwerkstoff-Platten wurden im Pressverfahren hergestellt.
- C2: Faserverbundwerkstoff dynalite 102-FG290 (4)/45 % Typ C (PA6) und Glasfasergewebe mit Endlosfasern der Fa. Bond-Laminates GmbH, Deutschland. Der Faserverbundkunststoff besitzt ein Faservolumengehaltt von ca. 45 vol.-% mit einer Orientierung von 0°/90°.
- C3: Faserverbundwerkstoff aus TROGAMID CX7323 (PACM 12) und Kohlenstofffasergewebe mit Endlosfasern. Das Gewebe besitzt ein Gewicht von ca. 250 g/m² mit einer Orientierung von 0°/90°. Die Faserverbundwerkstoff-Platten wurden im Pressverfahren hergestellt.
- C4: Faserverbundwerkstoff aus Epoxydharz (Entwicklungsprodukt Evonik) und Kohlenstofffasergewebe mit Endlosfasern. Das Gewebe besitzt ein Gewicht von ca. 250 g/m² mit einer Orientierung von 0°/90°. Die Faserverbundwerkstoff-Platten wurden im Pressverfahren hergestellt.
- C5: Faserverbundwerkstoff aus VESTAMID HTplus M1000 (PA6T) und Kohlenstofffasergewebe mit Endlosfasern. Das Gewebe besitzt ein Gewicht von ca. 285 g/m² mit einer Orientierung von 0°/90°. Die Faserverbundwerkstoff-Platten wurden im Pressverfahren hergestellt.

Die Platten wurden mit je einer Haftvermittler-Zusammensetzung beschichtet. Als Zusammensetzung wurden appliziert
- H1: Schmelzklebstoff auf Copolyamidbasis (Vestamelt X1333-P1 der Fa. Evonik), enthaltend eine Epoxidkomponente und ein blockiertes Polyisocyanat als Pulverbeschichtung, und
- H2: Lösemittelhaltiger Sprühlack enthaltend ca. 30 Gew.-% eines Schmelzklebstoffs auf Copolyamidbasis, enthaltend eine Epoxidkomponente und ein blockiertes Polyisocyanat.

Die beiden Zusammensetzungen H1 und H2 enthalten das gleiche Copolyamid.

Die Pulverbeschichtung wurde elektrostatisch mit einer Schichtstärke von 70 - 100 µm aufgetragen und für 5 min bei 160°C eingebrannt. Die Sprühlackbeschichtung beschichtung wurde elektrostatisch mit einer Schichtstärke von 50 - 70 µm aufgetragen und für 5 min bei 160°C eingebrannt. Die beschichteten Faserverbundwerkstoffe wurden hierzu in einen vorgeheizten Autoklaven (Ofen) gelegt.

Nach dem Einbrennvorgang wurden die Tafeln aus Faserverbundwerkstoff mit einer Schlagschere in, für den Pressvorgang passende, Streifen mit den Maßen 60,0 mm x 25,0 mm (Toleranz +0 -0,2 mm) geschnitten.

Als Verbundpartner wurden Metallbleche verwendet und per Konvertierungsmittel phosphatiert bzw. chromatiert. Als Konvertierungsmittel wurde Granodine 958 A der Firma Henkel, Deutschland für verzinkte Stahlbleche DX56D Z140 nach DIN EN 10346 (M1), enthaltend unter anderem Phosphorsäure und Zinkbis(dihydrogenphosphat) und eine Nachpassivierung aus Deoxylyte 54NC eingesetzt. Für Aluminiumbleche AlMg3 EN AW-5754 H111 nach DIN EN 573-3 (M2) wurde eine Konversionsschicht (Chromatierung) aus Alodine 1225 der Firma Henkel, Deutschland eingesetzt. Die Metallbleche wurden ebenfalls auf ein für den Pressvorgang passendes Maß von ca. 60,0 mm x 25,0 mm mittels einer Schlagschere zugeschnitten.

Der Erhalt der Verbindung zwischen beschichtetem Faserverbundkunststoff und Metall erfolgte durch einen Pressvorgang in einer hydraulischen Heißpresse (Hersteller Paul Weber, Bezeichnung TEMPRESS). Dabei wird in eine Hälfte der Heißpresse das unbeschichtete Metallblech mit den Maßen von ca. 60x25x1 mm in eine Schablone eingelegt, Darauf wird eine Platte aus einembeschichteten Faserverbundwerkstoff mit den Maßen 60x25x1 mm positioniert. Die blechseitige Hälfte der Presse wird auf ca. 230°C erhitzt. Im Anschluss werden der Faserverbundwerkstoff und das beschichtete Metallblech bei einem Druck von ca. 32 bar und einer Haltezeit von ca. 5min zu einem Verbundkörper verpresst. Der Überlappungsbereich zwischen Kunststoff und Metall betrugen ca. 25 mm x 25 mm. Der Probekörper besaß eine Gesamtlänge von ca. 130mm.

Die so erzeugten Prüfkörper wurden bei 50 % relativer Luftfeuchte für mindestens für 24 h bei 23 °C gelagert, um einen einheitlichen Konditionierungszustand zu gewährleisten. Die Probekörper werden dann in eine Standard-Zugprüfmaschine Zwick/Roell Z-020 eingespannt und mit einer Geschwindigkeit von 5 mm/min bei 23 °C mit einem Abstand zwischen den Klemmen und dem Überlappungsbereich von ca. 15 mm / Seite geprüft.

| **Beispiel** | **Faserverbun dkunststoff** | **Haftvermittler** | **Metall** | **Haftung in MPa** |
|---|---|---|---|---|
| 41 | C1 | ohne | M1 | n. m. |
| 42* | C1 | H1 | M1 | 6,7 |
| 43* | C1 | H2 | M1 | 7,2 |
| 44 | C1 | ohne | M2 | 1,8 |
| 45* | C1 | H1 | M2 | 7,3 |
| 46* | C1 | H2 | M2 | 7,5 |
| 47 | C2 | ohne | M1 | 0,6 |
| 48* | C2 | H1 | M1 | 7,9 |
| 49* | C2 | H2 | M1 | 8,1 |
| 50 | C2 | ohne | M2 | n. m. |
| 51* | C2 | H1 | M2 | 7,1 |
| 52* | C2 | H2 | M2 | 6,4 |
| 53 | C3 | ohne | M1 | n. m. |
| 54* | C3 | H1 | M1 | 7,4 |
| 55 | C3 | ohne | M2 | n. m. |
| 56* | C3 | H1 | M2 | 7,9 |
| 57 | C4 | ohne | M1 | 1,5 |
| 58* | C4 | H1 | M1 | 7,1 |
| 59 | C4 | ohne | M2 | n. m. |
| 60* | C4 | H1 | M2 | 8,0 |
| 61 | C5 | ohne | M1 | 0,7 |
| 62* | C5 | H1 | M1 | 6,8 |
| 63 | C5 | ohne | M2 | n. m. |
| 64* | C5 | H1 | M2 | 7,5 |

| | | | | |
|---|---|---|---|---|
| * erfindungsgemäß; n. m. = nicht messbar (keine Haftung) | | | | |

### D) Hybridbauteil aus Kunststoff und Faserverbundwerkstoff

### Aufbau: Kunststoff - Haftvermittler - Faserverbundwerkstoff

Zum Erhalt eines Verbundes aus beschichtetem Kunststoff und einem Faserverbundwerkstoff wurden verschiedene ca. 4,0 mm starke spritzgegossene Kunststoff-Platten mit den Maßen von ca. 60x25mm eingesetzt:
K1: Polyamid 6 GF30 (Durethan BKV30 H2.0 der Firma Lanxess, Deutschland)
K2: Polyphthalamid PA6T CF30 (VESTAMID HTPlus TGP3561 der Firma Evonik Industries AG)

Auf den Kunststoffplatten wurde eine Pulverbeschichtung H1 aus einem Schmelzklebstoff auf Copolyamidbasis (Vestamelt X1333-P1 der Fa. Evonik), enthaltend eine Epoxidkomponente und ein blockiertes Polyisocyanat appliziert.

Die Pulverbeschichtung wurde elektrostatisch mit einer Schichtstärke von 50 - 70 µm aufgetragen und für 5 min bei 160°C eingebrannt. Die beschichteten Bleche wurden hierzu in einen vorgeheizten Autoklaven (Ofen) gelegt.

Als Verbundpartner wurden Platten von ca. 60x25x1mm aus einem Faserverbundwerkstoff verwendet. Der Faserverbundwerkstoff besteht aus VESTAMID L1600 (Polyamid 12) und Kohlenstofffasergewebe mit Endlosfasern. Das Gewebe besitzt ein Gewicht von ca. 285 g/m² mit einer Orientierung von 0°/90°. Die Faserverbundwerkstoff-Platten wurden im Pressverfahren hergestellt.

Die Faserverbundwerkstoff-Platten mit einer Schlagschere in, für den Pressvorgang passende, Form mit den Maßen 24,9 mm x 59,8 mm (Toleranz ±0,2 mm) geschnitten.

Der Erhalt der Verbindung zwischen beschichtetem Kunststoff und Faserverbundkunststoff erfolgte durch einen Pressvorgang in einer hydraulischen Heißpresse (Hersteller Paul Weber, Bezeichnung TEMPRESS). Dabei wird in eine Hälfte der Heißpresse der beschichtete Kunststoff eine Schablone eingelegt, Darauf wird eine Platte aus einem Faserverbundwerkstoff positioniert. Die Presse wird vor dem Fügevorgang auf ca. 200°C erhitzt. Im Anschluss werden der Faserverbundwerkstoff und der beschichtete Kunststoff bei einem Druck von ca. 32 bar und einer Haltezeit von ca. 5min zu einem Verbundkörper verpresst. Der Überlappungsbereich zwischen Kunststoff und Metall betrugen ca. 25 mm x 25 mm. Der Probekörper besaß eine Gesamtlänge von ca. 130mm.

Die so erzeugten Prüfkörper wurden bei 50 % relativer Luftfeuchte für mindestens für 24 h bei 23 °C gelagert, um einen einheitlichen Konditionierungszustand zu gewährleisten. Die Probekörper werden dann in eine Standard-Zugprüfmaschine Zwick/Roell Z-020 eingespannt und mit einer Geschwindigkeit von 5 mm/min bei 23 °C mit einem Abstand zwischen den Klemmen und dem Überlappungsbereich von ca. 15 mm / Seite geprüft.

| **Beispiel** | **Kunststoff** | **Haftvermittler** | **Haftung in MPa** |
|---|---|---|---|
| 65 | K1 | ohne | 0,8 |
| 66* | K1 | H1 | 6,5 |
| 67 | K2 | ohne | n. m. |
| 68* | K2 | H1 | 8,0 |

| | | | |
|---|---|---|---|
| * erfindungsgemäß; n. m. = nicht messbar (keine Haftung) | | | |

### E) Hybridbauteil aus Faserverbundwerkstoff und Faserverbundwerkstoff

### Aufbau: Faserverbundwerkstoff - Haftvermittler - Faserverbundwerkstoff

Zum Erhalt eines Verbundes aus einem beschichteten Faserverbundwerkstoff und einem unbeschichteten Faserverbundwerkstoff wurden geeignete Pressversuche auf einer Heißpresse durchgeführt. Folgende ca. 1,5mm starke Faserverbundwerkstoffe wurden dabei eingesetzt:
- C1: Faserverbundwerkstoff aus VESTAMID L1600 (Polyamid 12) und Kohlenstofffasergewebe mit Endlosfasern. Das Gewebe besitzt ein Gewicht von ca. 285 g/m² mit einer Orientierung von 0°/90°. Die Faserverbundwerkstoff-Platten wurden im Pressverfahren hergestellt.
- C2: Faserverbundwerkstoff dynalite 102-FG290 (4)/45 % Typ C (PA6) und Glasfasergewebe mit Endlosfasern der Fa. Bond-Laminates GmbH, Deutschland. Der Faserverbundkunststoff besitzt ein Faservolumengehaltt von ca. 45 vol.-% mit einer Orientierung von 0°/90°.
- C3: Faserverbundwerkstoff aus TROGAMID CX7323 (PACM 12) und Kohlenstofffasergewebe mit Endlosfasern. Das Gewebe besitzt ein Gewicht von ca. 250 g/m² mit einer Orientierung von 0°/90°. Die Faserverbundwerkstoff-Platten wurden im Pressverfahren hergestellt.
- C4: Faserverbundwerkstoff aus Polyurethanharz (Entwicklungsprodukt Evonik) und Kohlenstofffasergewebe mit Endlosfasern. Das Gewebe besitzt ein Gewicht von ca. 200 g/m² mit einer Orientierung von 0°/90°. Die Faserverbundwerkstoff-Platten wurden im Pressverfahren hergestellt.
- C5: Faserverbundwerkstoff aus Epoxydharz (Entwicklungsprodukt Evonik) und Kohlenstofffasergewebe mit Endlosfasern. Das Gewebe besitzt ein Gewicht von ca. 250 g/m² mit einer Orientierung von 0°/90°. Die Faserverbundwerkstoff-Platten wurden im Pressverfahren hergestellt.

Auf einen Verbundpartner aus Faserverbundwerkstoff wurde eine Pulverbeschichtung H1 aus einem Schmelzklebstoff auf Copolyamidbasis (Vestamelt X1333-P1 der Fa. Evonik), enthaltend eine Epoxidkomponente und ein blockiertes Polyisocyanat appliziert.

Die Pulverbeschichtung wurde elektrostatisch mit einer Schichtstärke von 50 - 70 µm aufgetragen und für 5 min bei 160°C eingebrannt. Die beschichteten Bleche wurden hierzu in einen vorgeheizten Autoklaven (Ofen) gelegt.

Nach dem Einbrennvorgang wurden die beschichteten und unbeschichteten Faserverbundwerkstoffe mit einer Schlagschere in, für den Pressvorgang passende, Streifen mit den Maßen 60,0 mm x 25,0 mm (Toleranz +0 -0,2 mm) geschnitten.
Der Erhalt der Verbindung zwischen beschichtetem Kunststoff und Faserverbundkunststoff erfolgte durch einen Pressvorgang in einer hydraulischen Heißpresse (Hersteller Paul Weber, Bezeichnung TEMPRESS). Dabei wird in eine Hälfte der Heißpresse der beschichtete Faserverbundwerkstoff in eine Schablone eingelegt, Darauf wird eine Platte aus einem unbeschichteten Faserverbundwerkstoff positioniert. Die Presse wird vor dem Fügevorgang auf ca. 230°C erhitzt. Im Anschluss werden der beschichtete Faserverbundwerkstoff und der unbeschichtete Faserverbundwerkstoff bei einem Druck von ca. 32 bar und einer Haltezeit von ca. 5min zu einem Verbundkörper verpresst. Der Überlappungsbereich betrug ca. 25 mm x 25 mm. Der Probekörper besaß eine Gesamtlänge von ca. 130mm.

Die so erzeugten Prüfkörper wurden bei 50 % relativer Luftfeuchte für mindestens für 24 h bei 23 °C gelagert, um einen einheitlichen Konditionierungszustand zu gewährleisten. Die Probekörper werden dann in eine Standard-Zugprüfmaschine Zwick/Roell Z-020 eingespannt und mit einer Geschwindigkeit von 5 mm/min bei 23 °C mit einem Abstand zwischen den Klemmen und dem Überlappungsbereich von ca. 15 mm / Seite geprüft.

| **Beispiel** | **Faserverbun dkunststoff** | **Haftvermittler** | **Faserverb undkunst stoff** | **Haftung in MPa** |
|---|---|---|---|---|
| 69 | C1 | ohne | C2 | 2,9 |
| 70 | C1 | H1 | C2 | 7,7 |
| 71 | C1 | ohne | C3 | 8,8 |
| 72 | C1 | H1 | C3 | 11,0 |
| 73 | C4 | ohne | C5 | k. A. |
| 74 | C4 | H1 | C5 | 13,0 |
| 75 | C1 | ohne | C5 | 11,0 |
| 76 | C1 | H1 | C5 | 15,0 |

| | | | | |
|---|---|---|---|---|
| * erfindungsgemäß; k. A.; keine Angabe; n. m. = nicht messbar (keine Haftung) | | | | |

## Patentansprüche

1. Hybridbauteil umfassend mindestens einen Werkstoff B und mindestens eine Werkstoff A, wobei der Werkstoff B ein Faser-Kunststoff-Verbund ist und der Werkstoff A ausgewählt ist aus Kunststoffen, keramischen Massen, Holz, Glas, Verbundwerkstoffen, textilen Fasern und aus textilen Fasern hergestellten Fertigfabrikaten, und wobei der Werkstoff A mit dem Werkstoff B durch mindestens eine Beschichtung einer Haftvermittler-Zusammensetzung, die mindestens einen Schmelzklebstoff auf Copolyamidbasis enthält, verbunden ist, **dadurch gekennzeichnet, dass** die Fasern des Faser-Kunststoff-Verbund aus KohlenstoffFasern und Glasfasern ausgewählt werden.

2. Hybridbauteil nach Anspruch 1, **dadurch gekennzeichnet, dass** der Werkstoff A ausgewählt ist aus Kunststoffen und Faserverbundwerkstoffen.

3. Hybridbauteil nach einem der vorherigen Ansprüche, **dadurch gekennzeichnet, dass** das Hybridbauteil mindestens einen weiteren Werkstoff C, ausgewählt ist aus Kunststoffen, keramischen Massen, Holz, Glas, Verbundwerkstoffen, textilen Fasern und aus textilen Fasern hergestellten Fertigfabrikaten, umfasst, wobei der Werkstoff C verschieden ist von Werkstoff A.

4. Verfahren zur Herstellung eines Hybridbauteils nach einem der vorherigen Ansprüche, **dadurch gekennzeichnet, dass** die Haftvermittler-Zusammensetzung zumindest teilweise auf den Werkstoff A, den Werkstoff B oder auf beiden Werkstoffen aufgetragen bzw. aufgelegt wird und die Werkstoffe A und B miteinander verbunden werden.

5. Verfahren nach Anspruch 4, **dadurch gekennzeichnet, dass** ein Werkstoff C auf das Hybridbauteil aufgetragen bzw. aufgelegt und der Werkstoff C mit dem Hybridbauteil verbunden wird.

6. Verfahren nach Anspruch 4, **dadurch gekennzeichnet, dass** ein Werkstoff C gemeinsam mit den Werkstoffen A und B verbunden werden.

7. Verwendung der Hybridbauteile nach einem der Ansprüche 1 bis 3 als Strukturbauteil, Leichtbauteil, Bauteil mit Oberflächen- oder Schutzfunktion oder als dekoratives Bauteil.

8. Verwendung einer Zusammensetzung, die mindestens einen Schmelzklebstoff auf Copolyamidbasis enthält, als Haftvermittler zwischen einem Faserverbundwerkstoff als Werkstoff B und einem Werkstoff A, zur Herstellung eines Hybridbauteils nach einem der Ansprüche 1 bis 3.

## Claims

1. Hybrid component comprising at least one material B and at least one material A, wherein material B is a fibre-plastic composite and material A is selected from plastics, ceramic compositions, wood, glass, composite materials, textile fibres and prefabricated products produced from textile fibres, and wherein material A is bonded to material B by at least one coating of an adhesion promoter composition containing at least one copolyamide-based hotmelt adhesive, **characterized in that** the fibres of the fibre-plastic composite are selected from carbon fibres and glass fibres.

2. Hybrid component according to Claim 1, **characterized in that** material A is selected from plastics and fibre composite materials.

3. Hybrid component according to either of the preceding claims, **characterized in that** the hybrid component comprises at least one further material C selected from plastics, ceramic compositions, wood, glass, composite materials, textile fibres and prefabricated products produced from textile fibres, wherein material C is different from material A.

4. Process for producing a hybrid component according to any of the preceding claims, **characterized in that** the adhesion promoter composition is at least partly applied to or laid onto material A, material B or both materials, and materials A and B are bonded to one another.

5. Process according to Claim 4, **characterized in that** a material C is applied to or laid onto the hybrid component and material C is bonded to the hybrid component.

6. Process according to Claim 4, **characterized in that** a material C is bonded to materials A and B together.

7. Use of the hybrid components according to any of Claims 1 to 3 as structural component, lightweight component, component having a surface function or protective function, or as decorative component.

8. Use of a composition comprising at least one copolyamide-based hotmelt adhesive as adhesion promoter between a fibre composite material as material B and a material A for production of a hybrid component according to any of Claims 1 to 3.

## Revendications

1. Composant hybride comprenant au moins un matériau B et au moins un matériau A, le matériau B étant un composite fibre-plastique et le matériau A étant choisi parmi les plastiques, les masses céramiques, le bois, le verre, les matériaux composites, les fibres textiles et les produits finis fabriqués à partir de fibres textiles, et le matériau A étant relié au matériau B par au moins un revêtement d'une composition d'agent adhésif, qui contient au moins une colle thermofusible à base de copolyamide, **caractérisé en ce que** les fibres du composite fibre-plastique sont choisies parmi les fibres de carbone et les fibres de verre.

2. Composant hybride selon la revendication 1, **caractérisé en ce que** le matériau A est choisi parmi les plastiques et les matériaux composites fibreux.

3. Composant hybride selon l'une quelconque des revendications précédentes, **caractérisé en ce que** le composant hybride comprend au moins un autre matériau C, choisi parmi les plastiques, les masses céramiques, le bois, le verre, les matériaux composites, les fibres textiles et les produits finis fabriqués à partir de fibres textiles, le matériau C étant différent du matériau A.

4. Procédé de fabrication d'un composant hybride selon l'une quelconque des revendications précédentes, **caractérisé en ce que** la composition d'agent adhésif est appliquée ou, selon le cas, disposée au moins partiellement sur le matériau A, le matériau B ou sur les deux matériaux, et les matériaux A et B sont reliés l'un à l'autre.

5. Procédé selon la revendication 4, **caractérisé en ce qu'**un matériau C est appliqué ou, selon le cas, disposé sur le composant hybride et le matériau C est relié au composant hybride.

6. Procédé selon la revendication 4, **caractérisé en ce qu'**un matériau C est relié conjointement aux matériaux A et B.

7. Utilisation des composants hybrides selon l'une quelconque des revendications 1 à 3 en tant que composant structural, composant léger, composant comportant une fonction de surface ou une fonction de protection ou en tant que composant décoratif.

8. Utilisation d'une composition, qui contient au moins une colle thermofusible à base de copolyamide, en tant qu'agent adhésif entre un matériau composite fibreux en tant que matériau B et un matériau A, pour la fabrication d'un composant hybride selon l'une quelconque des revendications 1 à 3.
